# EUROPEAN PATENT APPLICATION

(11) **EP 1 683 626 A1**
(43) Date of publication of application: **26.07.2006**
(21) Application number: 05001442.2
(22) Date of filing: 25.01.2005
(51) Int. Cl.: B29C 71/00, B29C 45/00, B29D 11/00

(54) **Method and apparatus for treating injection moulded articles with gas**

(71) Applicant: Linde Aktiengesellschaft, 65189 Wiesbaden (DE)
(72) Inventor: Karthäuser, Joachim, 192 51 Sollentuna (SE); Marcusson, Anders, 181 81 Lidingö (SE)
(74) Representative: Gellner, Bernd

(57) **Abstract**

The invention relates to a method for the production of a polymeric article in a moulding tool comprising a first and a second mould half (1, 2). A liquid polymer (5) is introduced into a cavity (3) between said first and said second mould half and is at least partly solidified. Said second mould half (2) is removed, a cover (2, 7) is placed onto said first mould half (1) and a gas is introduced into the closed space (8) formed between said cover (2, 7), said polymer (6) and / or said first mould half (1).

## Description

The invention relates to a method for the production of a polymeric article in a moulding tool comprising a first and a second mould half, wherein a liquid polymer is introduced into a cavity between said first and said second mould half, said polymer is at least partly solidified, and said at least partly solidified polymer is subjected to a gas treatment. Further, the invention relates to an apparatus for the production of a polymeric article, comprising a moulding tool with a first and a second mould half.

In a conventional moulding process a liquid polymer is filled into a mould cavity, cooled down and solidified in order to obtain a polymeric article having the same shape as the mould cavity. Such moulding processes are carried out with or without the application of pressure. In some applications it is desired to chemically or physically modify the moulded polymeric article by adding or removing certain chemicals and thereby changing the chemical and physical characteristics of the article. As an example, a silicone contact lense is desired to be hydrophilic, an automotive head light should be scratch-resistant, a catheter should have a low-friction surface and so forth.

Known technical solutions are treatments after the moulding process. The articles may be treated by plasma or by coating followed by UV polymerization in separate reactors. For example, the modification of finished polymeric articles, in particular made of silicone rubber, has been described in international patent application WO 03/068846 A1. It has specifically been proposed to remove low molecular weight residues from the surface of the polymeric article by an extraction process using dense phase carbon dioxide prior to subjecting the article to a surface treatment. That extraction step is carried out at high pressures in an autoclave or in a special reactor.

However, the treatment of the polymeric articles in separate reactors requires special hardware and additional handling which increases the process time. Further, it includes the risk of contamination of the polymeric articles during transport and handling. In some cases, the polymeric articles may be very small and difficult to handle, for example contact lenses. In other cases the post-treatment, e.g. the application of a scratch-resistant coating may require a long process time, in yet other cases the binding or adhesion between the polymeric article and a coating may be unsufficient.

It is an object of the invention to provide an improved method and a corresponding apparatus for the production of polymeric articles which allow to modify the polymeric article. In particular, a method should be provided which is suitable for the surface or bulk treatment of polymeric articles while the articles are still in the moulding tool.

This object is achieved by a method for the production of a polymeric article in a moulding tool comprising a first and a second mould half, wherein a liquid polymer is introduced into a cavity between said first and said second mould half, said polymer is at least partly solidified, and said at least partly solidified polymer is subjected to a gas treatment, wherein after said polymer is at least partly solidified said second mould half is removed, a cover is placed onto said first mould half, a closed space is formed between said cover, said polymer and / or said first mould half, and said gas is introduced into said closed space.

According to the invention, a polymeric article is chemically or physically modified directly after its production. The polymeric article is moulded in a moulding tool comprising a first and a second mould half using conventional moulding technology. A liquid polymer is introduced into a cavity between said first and said second mould half and sufficiently solidified. Solidification can occur via reduction of temperature until at least partial crystallization occurs, or via chemical crosslinking.

As used herein, "at least partly solidified" means that the polymeric article is mechanically stable without the support from the second mould half. For a thermoplastic, this means that the temperature of the article has decreased to 5°C below the glass transition point of the polymer. For cross-linking silicone, this can be related to a 95% cross-linking degree.

The moulding process can be carried out with or without the application of pressure. As examples, silicone contact lenses are moulded under slightly elevated pressure whilst thermoplastic articles especially in multi-cavity tools are held under high pressure, equivalent to tons of holding power.

Then the moulding tool is opened and the second mould half is removed from the at least partly solidified polymeric article, so that the surface of the polymeric article which has initially been in direct contact with the second mould half does no more touch the corresponding surface of said second mould half. Thereby the polymeric article remains in the first mould half.

Next, a cover is placed onto the first mould half such that a closed space is formed between said cover and the at least partly solidified polymeric article or between the cover and the first mould half or between the cover, the first mould half and the polymeric article. The cover is not typically meant to touch the polymeric article. It is possible that the cover has partly contact with the polymeric article, but preferably the cover and the polymeric article do not touch each other at all. The main purpose of the cover is to keep a gas for a period of time in that closed space adjacent to the polymer.

ln a preferred embodiment of the invention said cover comprises a ring-like device and said second mould half. That means a ring-like device is inserted between said first and said second mould half. In this way a closed space is created between the surface of the polymeric article, said ring-like device and said second mould half.

As used herein, the term "ring-like device" means any device which may be placed between the first and the second mould half so that a closed space is formed by said two mould halves and said ring-like device.

According to the invention, an apparatus for the production of a polymeric article, comprising a moulding tool with a first and a second mould half, further comprises a ring-like device with at least one gas inlet and optionally at least one gas outlet, wherein said ring-like device is insertable between said first and said second mould half defining a closed space between said first mould half, said ring-like device and said second mould half. The ring-like device may be integrated into the second mould half, e.g. by retractable elements within the second mould half, however, a separate device will typically be the more economic solution.

As mentioned above, the ring-like device does preferably not touch the polymeric article located in the first mould half. The main function of the ring-like device is to keep the dense phase gas for a period of time in that closed space between the polymer and the second mould half. The ring-like device is not intended to modify the shape of the polymeric article according to the shape of the ring-like device.

It is advantageous to provide the ring-like device with a gas inlet in order to supply the gas, and if desired suitable additives, to the closed space. It is also possible to provide the ring-like device with separate inlets for additives, such as polymer precursors, metal salts, or other chemicals.

After the closed space has been formed, a gas, especially a compressed gas or a dense phase gas, is supplied into the closed space, and the polymeric article will be impregnated by that gas. Once the desired degree of impregnation is reached, the pressure in the closed space is reduced, the tool is opened and the impregnated and finished polymeric article is removed.

Preferably a compressed gas and more preferred a dense phase gas is introduced into said closed space. Due to its good solubility characteristics preferably carbon dioxide with or without additives is used. Such additives which may be introduced into the closed space together with said gas are for example polymer precursors, metal salts, dyes or other suitable chemicals.

Depending on the polymer which shall be treated or impregnated by that gas, it is advantageous to compress the gas or hold the gas compressed within said closed space to a pressure of at least 10 bars, such as at least 50 bar, such as at least 100 bar or higher, or such as between 40 and 200 bars. Since moulding tools and moulding machines are designed to withstand pressures of even higher pressures, it is possible to subject the polymeric article to a high pressure impregnation.

Optionally and preferably in cases where the impregnation requires more time than the moulding, the process is carried out on multi-stage injection moulding machines. The polymeric article is produced in a multi-stage process in different stations, wherein between two stages said polymer is transferred from one station to another, and wherein said polymer is subjected to said gas at least at the second station, but optionally at both stations. For example, the production process comprises one moulding station and two impregnation stations where the polymeric article is subjected to the inventive gas treatment step. In the moulding station a liquid polymer is filled into the moulding tool and the polymeric article is formed. After at least partly solidifying the polymer, the polymeric article is transferred from the moulding station to the first impregnation station. In the moulding station it is then possible to produce the next polymeric article while the prior produced polymeric article is impregnated in the first impregnation station. Next, the partly impregnated polymeric article is transferred to the second impregnation station for final impregnation, the polymeric article just formed in the moulding station is moved to the first impregnation station and the moulding tool may be filled with liquid polymer again.

The transfer between different stations in a multi-stage production process may be carried out by a a rotatable tool or a conveyor belt. For example, when using rotating tools, advantages in cycle time are achieved. Multiple or consecutive impregnation can be achieved by rotating the tool three times 90° and performing the impregnation three times at the positions 90°, 180° and 270°, or up to a total of seven times at the positions 0° (once directly after moulding), 90° (twice), 180° (twice) and 270° (twice).

It is further possible to subject said polymeric article to subsequent treatment steps, for example painting, after said treatment in said gas.

The invention is in particular useful for producing silicone-based articles or polymethacrylate or polycarbonate articles, as specific examples for rubbers and thermoplastics. It is also possible to add certain substances, for example silanes, during or after the moulding of glassware and porcelain. Further, in a metal-injection-moulding process the invention can be used for subsequent surface treatment or removal of sacrificial binding agent.

The inventive method is especially advantageous in cases where the polymeric articles cannot be impregnated once they are cooled down. Directly after production, the polymeric article typically has a temperature of between 100 and 200 °C, and the diffusion coefficients, and therefore the efficiency for gas-assisted impregnation, is significantly higher at these elevated temperatures. In a preferred embodiment the inventive method uses the residual heat available in both the polymeric article and the e.g. electrically heated, moulding tool. In specific cases the heat is gradually removed from the polymeric article during the gas assisted impregnation, thereby reducing the risk of mechanical deformation. In that respect, the gas impregnation serves also as a controlled cooling method.

The invention as well as further details and preferred embodiments of the invention are disclosed in the following description and illustrated in the accompanying drawings, in which
figures 1 to 6 show different steps of the inventive method.

The inventive method may be used for the production of an automotive headlight by injection moulding. A moulding tool comprising a first 1 and a second moulding half 2 is closed (figure 1) and a liquid polymer 5 is injected into the mould cavity 3 through a polymer inlet 4 in order to form a polymeric article 6 (figure 2). After the polymeric article 6 is partly solidified, the moulding tool is opened by removing the second mould half 2 (figure 3). At this stage, the polymeric article 6 is not yet cooled down to ambient temperature, but has a temperature of preferably between 100°C and 200°C.

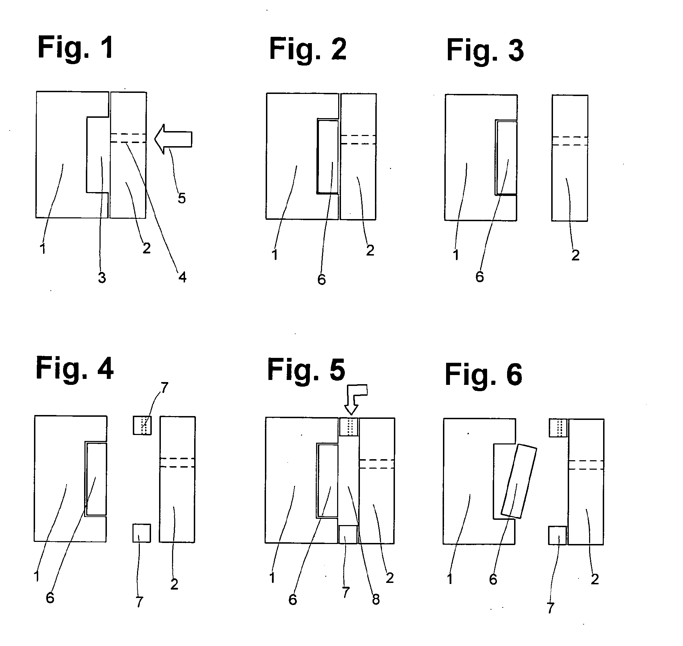

Next, a ring-like device 7 is placed between the first mould half 1 and the second mould half 2 (figure 4), and the moulding tool is closed again (figure 5). Thus a closed space 8 is generated between the polymeric article 6, the ring-like device 7 and the mould halves 1, 2. Carbon dioxide at a pressure of 100 bars, together with suitable additives such as acrylates, is injected into the closed space 8. The carbon dioxide and the additives diffuse into the polymeric article and cause a chemical and / or physical modification of the characteristics of the polymeric article, in particular of its surface properties. After that impregnation step has been finished the moulding tool is opened and the polymeric article is removed (figure 6). The article may be exposed to UV light to initiate the polymerization of additives now deposited into the thermoplastic.

The invention will be further illustrated with reference to some examples:

### Example 1:

This example refers to the production of silicone-based contact lenses with hydrophilic properties. Silicone, such as 2-component LSR, is filled into a suitable mould. The mould is brought to elevated temperature for a sufficient time to cross-link the silicone monomers, e.g. 20 min at 70 °C. Next, the mould is opened, and a ring-like metallic device is positioned between the moulds. The moulds are closed and held with sufficient pressure to enable filling the closed space with compressed gas. The closed space is herein defined by the moulds, the ring-like device and the contact lense. The gas preferably used is carbon dioxide along with additives such as selected from the group of compounds mentioned in WO 03/068846 A1, and / or specifically selected from the group of compounds containing vinyl groups, such as vinylpyrrolidone, and mono- and bis-acrylates and -methacrylates, such as 2-hydroxy-ethyl-methacrylate (HEMA), or triethylene glycol di(meth)acrylate, or other hydrophilic acrylates and methacrylates.

Polymerisation of the monomers, e:g. the acrylate monomers impregnated into the silicone matrix, is preferably achieved by UV light, and preferably by exposing the impregnated article to UV light while the article is held under pressure, e.g. through a window in the second mould half.

### Example 2:

The invention may also be used to colour mobile phone display windows made of PMMA. PMMA is injection moulded and subsequently treated similar to the items in example 1. However, in this case the gas (CO₂) injected into the closed space contains CO₂-soluble pigments such as phtalocyanine dyes.

### Example 3:

It is often desired to provide polycarbonate articles (e.g. automotive or telecom parts) with abrasion resistance. Following the injection moulding of polycarbonate, compounds selected from the group of derivatives of acrylic and methacrylic acid (e.g. esters, glycols, silanes) and the group of derivatives of styrene (polystyrene of mol weight between 300 and 10 000, and grafted derivatives thereof), and the group of glycols, are impregnated into the injection moulded article as explained above. Optionally, the impregnated chemicals are further crosslinked off-line or on-line (see example 1) using e.g. UV photopolymerisation.

### Example 4:

Method to change the haptic appearance of a surface: Following the injection moulding or extrusion of any plastic, the article is subjected to the impregnation of compounds mentioned in WO 03/ 068846 A1 or compounds selected from the group of derivatives of styrene, polymers of butadiene or isoprene, or derivatives of fatty acids including multiply unsaturated fatty acids and alcohols and esters, including alcoxylated alcohols. Optionally, the impregnated chemicals are cross-linked thereafter off-line. The method is especially useful for silicone and other rubbers, and the process may be combined with the initial removal of process oils from the substrate, followed by impregnation.

## Claims

1. Method for the production of a polymeric article in a moulding tool comprising a first and a second mould half (1, 2), wherein
- a liquid polymer (5) is introduced into a cavity (3) between said first and said second mould half,
- said polymer (5) is at least partly solidified, and
- said at least partly solidified polymer is subjected to a gas treatment,
**characterized in that**
- after said polymer is at least partly solidified said second mould half (2) is removed,
- a cover (2, 7) is placed onto said first mould half (1),
- a closed space (8) is formed between said cover (2, 7), said polymer (6) and / or said first mould half (1), and
- said gas is introduced into said closed space (8).

2. Method according to claim 1, **characterized in that** said cover comprises a ring-like device (7) and said second mould half (2).

3. Method according to any of claims 1 or 2, **characterized in that** a compressed gas and / or a dense phase gas, especially carbon dioxide, is introduced into said closed space (8).

4. Method according to any of claims 1 to 3, **characterized in that** additives, preferably polymer precursors, metal salts, dyes and / or chemicals, are introduced into said closed space (8).

5. Method according to any of claims 1 to 4, **characterized in that** the pressure in said closed space (8) is between 30 and 300 bars.

6. Method according to any of claims 1 to 5, **characterized in that** said polymeric article is produced in a multi-stage process in different stations, wherein between two stages said polymer is transferred from one station to another, and wherein said polymer is subjected to said gas at least at the second station.

7. Method according to claim 6, **characterized in that** said polymer is transferred between said stations by a rotatable tool or a conveyor belt.

8. Method according to any of claims 1 to 7, **characterized in that** silicone-based articles or polycarbonate articles are produced.

9. Method according to any of claims 1 to 7, **characterized in that** said polymeric article is subjected to subsequent treatment steps after said gas treatment, including polymerization by heat and UV photopolymerisation.

10. Apparatus for the production of a polymeric article, comprising a moulding tool with a first and a second mould half (1, 2),
**characterized in that**
it further comprises a ring-like device (7) with a gas inlet, wherein said ring-like device (7) is insertable between said first and said second mould half (1, 2) defining a closed space (8) between said first mould half (1), said ring-like device (7) and said second mould half (2).

11. A medical device such as a contact lense or a catheter or a disposable device made according to any of claims 1 to 9.

12. An article such as an automotive headlight, a mobile telephone display window or other article for use in the automotive and telecom industry, made according to any of claims 1 to 9.
